# EUROPEAN PATENT SPECIFICATION

(11) **EP 2 748 040 B1**
(45) Date of publication and mention of the grant of the patent: **09.03.2016**
(21) Application number: 11799482.2
(22) Date of filing: 15.11.2011
(51) Int. Cl.: B60S 9/08

(54) **LANDING GEAR**
FAHRWERK
TRAIN D'ATTERRISSAGE

(30) Priority: 21.09.2011 TR 201109286
(43) Date of publication of application: 02.07.2014
(73) Proprietor: Oms Makina Imalat Sanayi Ticaret Limited Sirketi, Nevsehir (TR)
(72) Inventor: KAHRAMAN, Ilhan, Nevsehir (TR)
(74) Representative: Dericioglu Kurt, Ekin
(86) International application number: PCT/IB2011/055101
(87) International publication number: WO 2013/041917

(56) References cited:
- EP-A1- 2 223 830
- EP-A2- 0 380 941
- EP-A2- 1 350 701
- US-A1- 2003 168 648
- US-A1- 2009 321 696
- US-A1- 2011 057 430

## Description

### Technical field

This invention relates to the jacks ensuring trailers, truck trailers and tractor trailers to stand firmly and functionally in park without a tractor unit.

### Prior Art

Trailer parking legs are used in order to ensure trailers, truck trailers and tractor trailers to stand independently in park without a tractor unit. Two parking legs are fixed on the right and left sides of the wheelless front parts of vehicles such as trailer, tractor trailer. The fact that the part, which is located in the height adjusting mechanisms of parking legs in the left and right hands and called as nut, has different geometry for both legs is one of the most important problems of parking legs produced today. The reason for this problem is the fact that the height adjusting shaft passing through the nut is not produced equiaxially with the body of parking leg. The shaft used in the left parking leg of the vehicle is located on the right side of parking leg, and the shaft used in the right parking leg of the vehicle is located on the left side of parking leg. The most important problem caused by the fact that the parts called as nut do not have the same geometry in both legs is the requirement of using different nuts for each leg. Different nut usage in both legs causes problems especially in stocking spare parts. This situation causes to use more storage areas and increases the cost.

Today, the method used in the production of inner and outer bushings of the trailer parking legs is cutting the material produced as shaped tubes in desired sizes. The inner and outer bushings produced with this method are heavy and have high costs.

Another important technical problem of parking legs in state of the art is the fact that the maintenance and assembly of the operating mechanism of the leg are difficult. Various gears and shafts used in parking legs produced today are located inside of the inner bushing; therefore, maintenance works are very difficult.

In EP0380941 numbered European patent document which is one of the states of the art, a telescopic support device for trailers is mentioned. The device includes an outer tube, a first inner tube that can stretch downward inside the outer tube and at least one telescopic support leg consisting of one fixing plate for fixing the support bracket to the object to be supported. In order to decrease weight and facilitate the production, it is produced with girders from a light metal like aluminum alloy as monolith with the outer tube fixing plate by extrusion method.

Document US 2003/168648 A1 discloses a parking leg ensuring trailers, truck trailers and tractor trailers to stand firmly and functionally in park without a tractor unit having:
- at least one inner bushing,
- at least one outer bushing located outside of said at least one inner bushing and moving upwards and downwards,
- at least one transmission cover located on said at least one outer bushing,
- at least one drive shaft placed vertical to the axes of said at least one inner bushing and of said at least one outer bushing,
- at least one pinion gear fixed to the drive shaft and being equiaxial with said drive shaft,
- at least one big gear ring,
- at least one vertical cone gear fixed to the big gear ring and being equiaxial with said big gear ring,
- one support shaft passing through the centers of said at least one big gear ring and of said at least one vertical cone gear
- at least one horizontal cone gear placed in an axis vertical to the axis of said at least one vertical cone gear and being in contact with said at least one vertical cone gear,
- at least one height adjusting shaft fixed to said at least one horizontal cone gear,
- at least one shoe fixed to said at least one inner bushing,
- at least one drive shaft bearing which is located in said at least one outer bushing and bears said at least one drive shaft and through which said at least one height adjusting shaft passes,
- at least one nut through which said at least one height adjusting shaft passes and which is placed in said at least one inner bushing,
- a threaded hole located on said at least one nut enabling the height adjusting shaft to pass through the nut,
- at least one drive gear,
- at least one small gear ring transferring the drive coming from said at least one drive gear to the support shaft and said at least one big gear ring,
- connector plates on both sides of said at least one outer bushing,
- screw holes located on the connector plates,
- said at least one inner bushing being produced from sheet metal for low weight and cost,
- said at least one outer bushing being produced from sheet metal for low weight and cost.

### Brief Description of the Invention

The objective of this invention is to produce a parking leg ensuring vehicles such as trailers, truck trailers and tractor trailers to stand functional and in balance independently of a tractor unit.

Another objective of this invention is to produce a parking leg which is equiaxial with height adjusting shaft, outer bushing and inner bushing.

Another object of this invention is to produce a lightened and strengthened parking leg.

Another object of this invention is to produce a cost-efficient parking leg.

### Detailed Description of the Invention

The "parking leg" produced to achieve the object of this invention is shown in attached figures, and these figures shows respectively:
**Figure-1** Frontal view of a trailer with two parking legs.
**Figure-2** Frontal view of the parking leg.
**Figure-3** Perspective view of the outer bushing.
**Figure-4** Perspective view of the nut.
**Figure-5** Partial side view of the parking leg.
**Figure-6** Frontal view of the outer bushing.
**Figure-** 7 Sectional side view of the parking leg.
**Figure-8** Sectional perspective view of the parking leg.
**Figure-9** Sectional perspective view of the gears and the nut.
**Figure-10** Sectional views of different profile presses exerted on inner and outer bushings.
**Figure**-**11** Plan view of the nut.
**Figure-12** Plan view of the nut which is used in state of the art.
**Figure**-**13** Sectional view of a parking leg in state of the art.
**Figure**-**14** Sectional view of the parking leg produced equiaxially with the height adjusting shaft and inner bushing.

The parts in the figures have been enumerated one by one and the parts shown by these numbers are given below:
- 1.: Parking leg
- 2.: Inner bushing
- 3.: Outer bushing
- 4.: Drive shaft
- 5.: Pinion gear
- 6.: Big gear ring
- 7.: Vertical cone gear
- 8.: Support shaft
- 9.: Horizontal cone gear
- 10.: Height adjusting shaft
- 11.: Nut
111. Threaded hole
- 12.: Connector plate
121. Screw hole
- 13.: Stamping press
- 14.: Assembly slot
- 15.: Profile press
- 16.: Equiaxial countersinks
- 17.: Shoe
- 18.: Transmission cover
- 19.: Drive gear
- 20.: Small gear ring
- 21.: Nut holder
- 22.: Oil sump
- 23.: Drive shaft bearing

Parking leg (1) subjecting to the invention which ensures trailers, truck trailers and tractor trailers to stand firmly and functionally in park without a tractor unit includes;
- at least one inner bushing (2),
- at least one outer bushing (3) located outside of inner bushing (2) and moving upwards (in the direction of arrow U) and downwards (in the direction of arrow D),
- at least one transmission cover (18) located on the outer bushing (3),
- at least one drive shaft (4) placed vertical to the axes of inner bushing (2) and outer bushing (3),
- at least one pinion gear (5) fixed to the drive shaft (4) as equiaxial with the drive shaft (4),
- at least one big gear ring (6),
- at least one vertical cone gear (7) fixed to the big gear ring (6) as equiaxial with the big gear ring (6),
- one support shaft (8) passing through the centers of big gear ring (6) and vertical cone gear (7)
- at least one horizontal cone gear (9) placed in an axis vertical to the axis of vertical cone gear (7) and as in contact with the vertical cone gear (7),
- at least one height adjusting shaft (10) fixed to the horizontal cone gear (9),
- at least one nut (11) through which the height adjusting shaft (10) passes and which is placed in the inner bushing (2),
- a threaded hole (111) located on the nut (11) enabling the height adjusting shaft (10) to pass through the nut (11),
- at least one nut holder (21) fixing the nut (11) inside the inner bushing (2),
- an oil sump (22) located on the upper part (the part in the direction of arrow U) of the nut (11),
- at least one drive shaft (19) placed outside of the outer bushing (3),
- at least one small gear ring (20) placed outside of the outer bushing (3) and transferring the drive coming from drive gear (19) to the support gear (8) and big gear ring (6),
- connector plates (12) produced as monolith with the outer bushing (3) and located on both sides of the outer bushing (3),
- screw holes (121) located on the connector plates (12),
- stamping press (13) which can be in different forms and which is placed on the outer bushing (3) and inner bushing (2) respectively to increase the endurance of outer bushing (3) and inner bushing (2),
- at least one assembly slot (14) placed on the outer bushing (3) and ensuring drive shaft (19) and small gear ring (20) to be placed outside of the outer bushing (3) by enabling the support shaft (8) to drive off the outer bushing (3),
- profile press (15) exerted to the outer bushing (3),
- at least one drive shaft bearing (23) which is located in the inner bushing (2) and bears the drive shaft (4) and through which the height adjusting shaft (10) passes,
- equiaxial countersinks (16) which are located on the connector plate (12) and
- at least one shoe (17) fixed to the inner bushing (2)

Inner bushing (2) constitutes the part of the trailer parking leg (1) subjecting to the invention that is fixed on the ground. Other parts of the parking leg (1) are connected to the inner bushing (2) directly or indirectly. The inner bushing (2) is produced from a sheet metal made from any metal or metal alloy for the preferred application of the invention. In order to increase the endurance of the inner bushing (2) which is produced from sheet metal, stamping press (13) is exerted to the bushing. Usage of heavy and costly shaped tubes is prevented by producing inner bushing from sheet metal.

The outer bushing (3) circles the inner bushing (2) and preferably has a tetragonal structure as the inner bushing (2). The outer bushing (3) can move up and down over the inner bushing (2) while the height of the parking leg (1) is adjusted. The outer bushing (3) is produced from a sheet metal made from any metal or metal alloy for the preferred application of the invention. In order to increase the endurance of the outer bushing (3) which is produced from sheet metal, stamping press (13) is exerted to the bushing. By this way the usage of shaped tube which was used in the prior art is prevented and a lighter and cheaper outer bushing is produced.

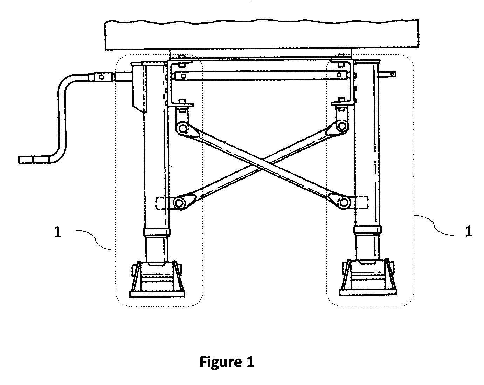

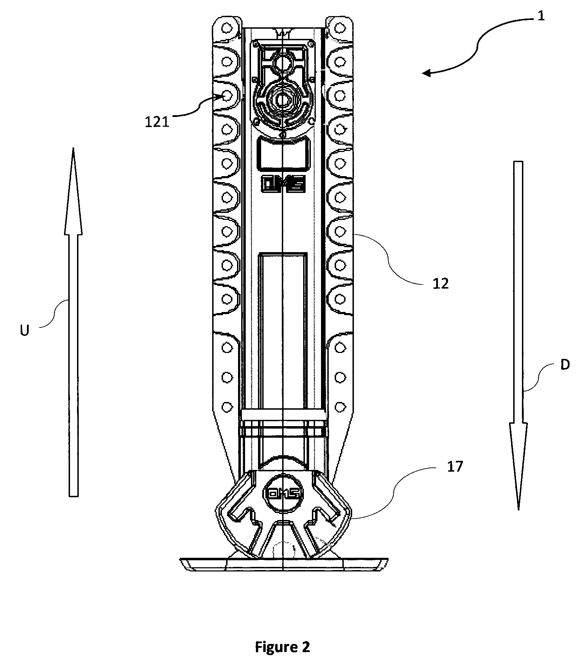

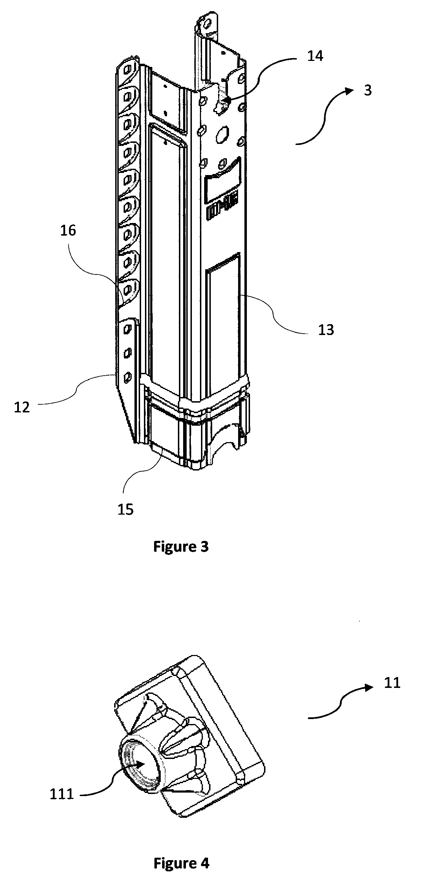

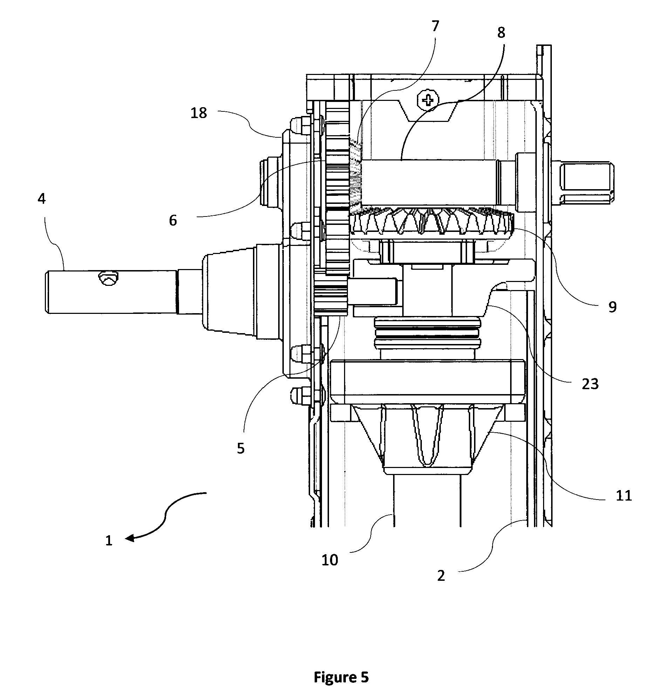

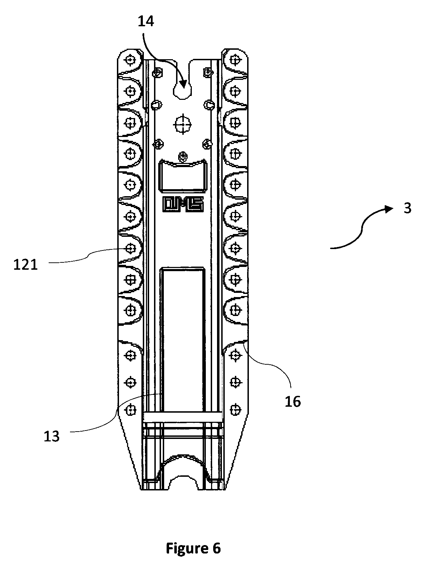

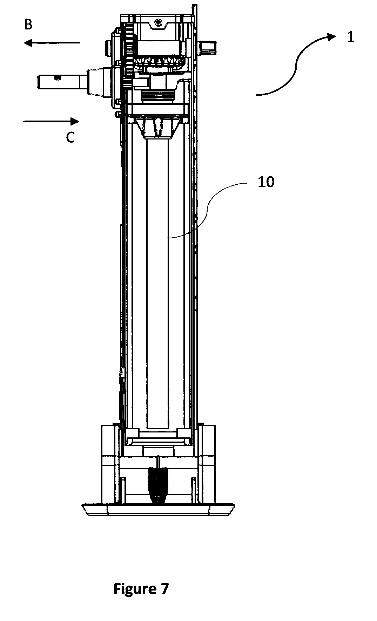

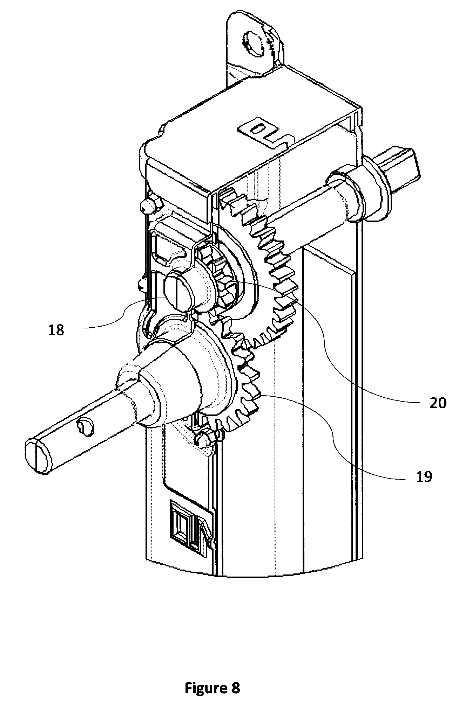

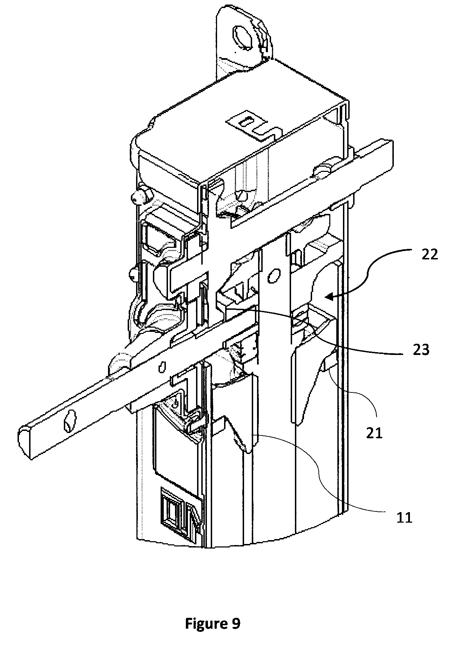

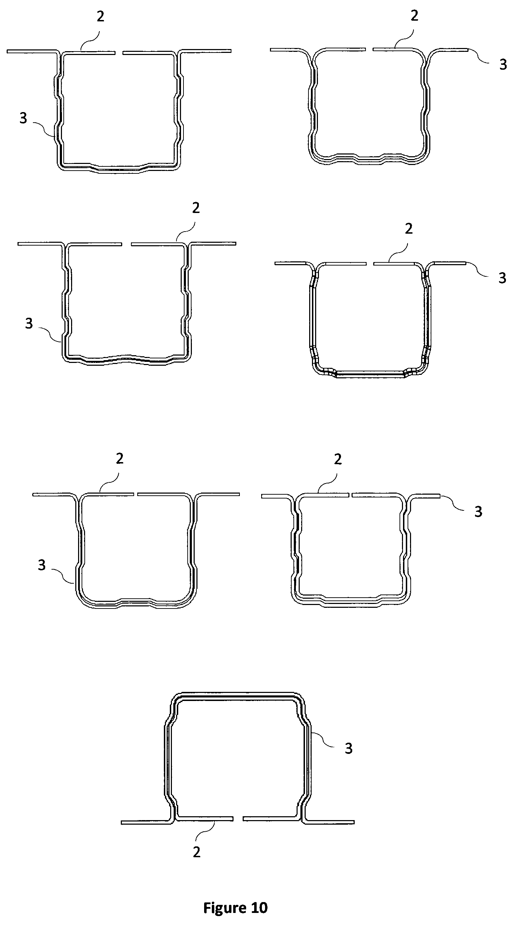

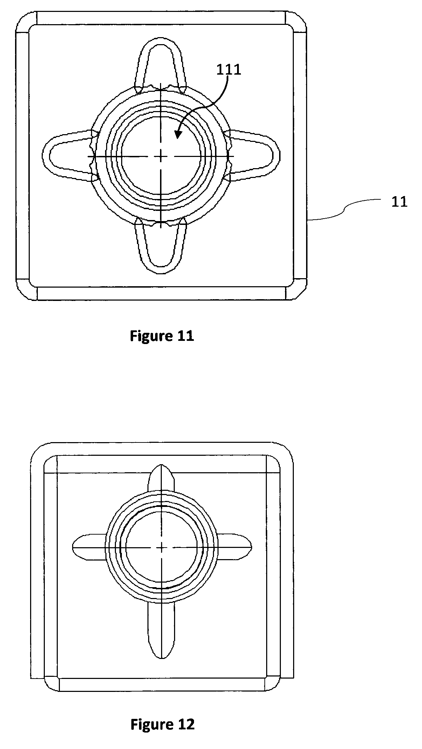

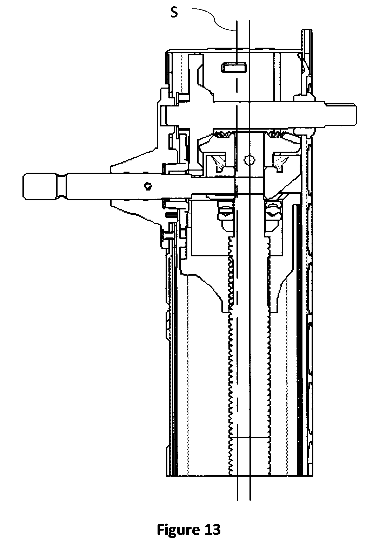

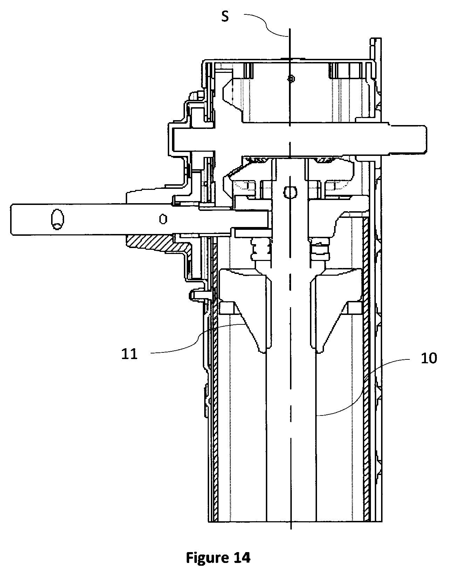

Different profile pressing techniques can be applied on the inner bushing (2) and outer bushing (3) (figure 9).

The drive shaft (4) is the part to which the necessary drive is given for the height adjustment of the parking leg (1). During the upward and downward movement of the outer bushing (3), the drive shaft (4) also moves together with the outer bushing (3). The drive shaft (4) can move inside or outside of the outer bushing (3).

The pinion gear (5) is fixed to the drive shaft (4) as equiaxial with the drive shaft (4). As the drive shaft (4) is pushed in the direction of arrow C, the pinion gear (5) gets in contact with the big gear ring (6). As the drive shaft (4) is pushed in the direction of arrow C, the pinion gear (5) starts to rotate the big gear ring (6) with the drive it gets from the drive shaft (4). As the drive shaft (4) is pushed down in the direction of arrow B, the pinion gear (5) contacts with the gears on the inner surface of the drive gear (19). When the drive shaft (4), which is pushed down in the direction of arrow B, is started to rotate, the pinion gear (5) starts to rotate the drive gear (19) with the drive it gets from the drive shaft (4). And the drive gear (19) rotates the small gear ring (20). Because the gear rates are different while the drive shaft (4) is pushed in the direction of arrow C or pushed down in the direction of arrow B, the trailer parking leg can be used in preferred speed by moving the drive shaft (4) in the direction of arrow C or arrow B.

When the big gear ring (6) is pushed in the direction of arrow C, it contacts with the pinion gear (5). The big gear ring (6) is fixed to the support shaft (8) which passes through its center equiaxially. The big gear ring (6) starts to rotate with the drive it gets from the pinion gear (5) and rotates the support shaft (8) in the same axis.

The vertical cone gear (7) is fixed to the support shaft (8) equiaxially with the support shaft (8). When the big gear ring (6) and the support shaft (8) start to move, the vertical cone gear (7) also starts to rotate in the same axis with the support shaft (8). The vertical cone gear (7) is in contact with the horizontal cone gear (9). The movement of the vertical cone gear (7) enables the horizontal cone gear (9) which is fixed in the outer bushing in the same axis with inner bushing (2) and outer bushing (3) to rotate around its own axis. The vertical cone gear (7) and the horizontal cone gear (9) is located inside the outer bushing (3).

The horizontal cone gear (9) is fixed to the height adjusting shaft (10) which is placed in the same axis with the horizontal cone gear (9). By the movement of the horizontal cone gear (9), the height adjusting gear starts to rotate in the same axis. There are screw pitches on the exterior surface of the height adjusting shaft (10). The screw pitches on the exterior surface of the height adjusting shaft (10) are in cooperation with the screw pitches on the threaded hole (111) located on the nut. When the height adjusting shaft (10) starts to rotate around its own axis, it moves upwards and downwards according to the direction of the rotation inside the nut which is fixed inside the inner bushing (2) irrotationally. By this way, the drive shaft (4), pinion gear (5), big gear ring (6), vertical cone gear (7), support shaft (8) and horizontal cone gear (9) bearing inside the outer bushing (3) move upwards and downwards together with the outer bushing (3) according to the direction of movement of the height adjusting shaft (10).

When the drive shaft (4) pushed down in the direction of arrow C starts to rotate, the pinion gear (5) which is fixed on the drive shaft (4) enables the drive gear (19) to rotate in the same axis and direction. The drive gear (19) is placed equiaxially with the drive shaft (4) on the part of drive shaft (4) out of the outer bushing (3) and in such a way that it can rotate independently of the drive shaft. The drive gear (19) which is placed outside of the outer bushing (3) is preferably covered by transmission cover (18).

The small gear ring (20) is fixed to the part of support shaft (8) that is removed from the outer bushing (3) through the assembly slot (14). The small gear ring (20) is in contact with the drive gear (19) and transfers the drive it gets from the drive gear (19) to the support shaft (8) and the big gear ring (6). The small gear ring (20) is covered with the transmission cover for the preferred application of the invention.

By placing the small gear ring (20) and drive gear (19) outside of the outer bushing (3), a wide area is provided inside the inner bushing (2) and the height adjusting shaft (10) can be placed in the same axis with the inner bushing (2). By this way, the center of threaded hole (111) through which the height adjusting shaft (10) passes comes up to the symmetry axis (S) of the nut (11) and the inner bushing (2).

The fact that the small gear ring (20) and drive shaft (4) are placed outside of the outer bushing (3) also facilitates the assembly and maintenance of small gear ring (20) and drive shaft (4). One can reach to the small gear ring (20) and drive gear (19) by removing the transmission cover (18) and when needed, the small gear ring (20) and drive gear (19) can be replaced for purposes such as maintenance, assembly and replacing the gears for changing the height adjusting speed.

The connector plate (12) is the part with which the parking leg (1) subjecting to the invention is assembled to vehicles like trailers. The connector plate (12) is produced as monolith with the outer bushing (3) for the preferred application of the invention. There are screw holes on the connector plate (12) for enabling the connection between the parking leg (1) and vehicles such as trailer and tractor trailer.

In order to increase the endurance of outer bushing (3) and inner bushing (2) on the parking leg (1) subjecting to the invention stamping press (13), which can be in different forms, is used to give a shape. By this way, endurance level against deformation has increased; the opportunity of production with lighter materials has arisen, total weight and cost have decreased.

The maintenance and assembly of parts such as drive gear (19) and support shaft (8) inside the outer bushing (3) have been facilitated by opening an assembly slot (14) on the outer bushing (3) of parking leg (1) subjecting to the invention. The parts outside of the outer bushing (3) can be assembled and disassembled easily through the assembly slot (14).

Profile presses (15) are available under the outer bushing (3) for increasing the endurance level. Bands are not required anymore for this part thanks to the increased endurance level attained by profile pressing (15). By this way the number of the materials decreases, and so do the cost and weight.

Equiaxial countersinks (16) are placed on the connector plates equiaxially with the screw holes (121). Equiaxial countersinks (16) provide high endurance, a firm structure and easy assembly.

The assembly slot (14) is a slot opened on the outer bushing (3). Small gear ring is placed on the part of support shaft (8) driving off the outer bushing (3), which locates out of the outer bushing (3) through the assembly slot. The fact that the small gear ring (20) is placed out of the outer bushing (3) through the assembly slot (14) facilitates maintenance and assembly. The drive gear (19) can be placed on the part of the drive shaft (4) out of the outer bushing by the fact that the small gear ring (20) is placed out of the outer bushing (3). By this way, maintenance and assembly of the drive gear (19) can be done easily.

The transmission cover (18) is placed over the drive gear (19) and small gear ring (20) which locate out of the outer bushing (3), and protect drive gear (19) and small gear ring (20) from outer environment. For the preferred application of the invention, the transmission cover (18) is produced in a way that it can be removed from the outer bushing (3). The transmission cover (18) is preferably fixed to the outer bushing with at least one screw. Countersinks are placed equiaxially with the connection axis around the screw holes (which are not shown in figures) used for fixing the transmission cover (18) to the outer bushing (3). By this way, the connection becomes more rigid. The endurance level of the transmission cover (18) is increased by applying horizontal, vertical and rotational stamping press.

It is possible to develop various applications of parking leg (1) subjecting to the invention and it cannot be limited only with the samples explained here; basically it is as stated in the section of claims.

## Claims

1. A parking leg (1) ensuring trailers, truck trailers and tractor trailers to stand firmly and functionally in park without a tractor unit having:
- at least one inner bushing (2),
- at least one outer bushing (3) located outside of said at least one inner bushing (2) and moving upwards (U) and downwards (D),
- at least one transmission cover (18) located on said at least one outer bushing (3),
- at least one drive shaft (4) placed vertical to the axes of said at least one inner bushing (2) and of said at least one outer bushing (3),
- at least one pinion gear (5) fixed to said at least one drive shaft (4) being equiaxial with said at least one drive shaft (4),
- at least one big gear ring (6),
- at least one vertical cone gear (7) fixed to said at least one big gear ring (6) being equiaxial with said at least one big gear ring (6),
- one support shaft (8) passing through the centers of said at least one big gear ring (6) and of said at least one vertical cone gear (7)
- at least one horizontal cone gear (9) placed in an axis vertical to the axis of said at least one vertical cone gear (7) and being in contact with said at least one vertical cone gear (7),
- at least one height adjusting shaft (10) fixed to said at least one horizontal cone gear (9),
- at least one shoe (17) fixed to said at least one inner bushing (2),
- at least one drive shaft bearing (23) which is located in said at least one outer bushing (3) and bears said at least one drive shaft (4) and through which said at least one height adjusting shaft (10) passes,
- at least one nut (11) through which said at least on height adjusting shaft (10) passes and which is placed in said at least one inner bushing (2),
- a threaded hole (111) located on said at least one nut (11) enabling said at least one height adjusting shaft (10) to pass through said at least one nut (11),
- at least one nut holder (21) fixing said at least one nut (11) inside said at least one inner bushing (2),
- an oil sump (22) located on the upper part of the nut (11),
- at least one drive gear (19),
- at least one small gear ring (20) transferring the drive coming from of said at least one drive gear (19) to the support shaft (8) and big gear ring (6),
- connector plates (12) on both sides of said at least one outer bushing (3),
- screw holes (121) located on the connector plates (12),
- stamping press (13) applied on said at least one outer bushing (3) to increase the endurance of said at least one outer bushing (3),
- at least one assembly slot (14) placed on said at least one outer bushing (3),
- profile pressing (15) exerted to said at least one outer bushing (3),
- equiaxial countersinks (16) on the connector plates (12),
and wherein
- a height adjusting shaft (10) placed in said at least one inner bushing (2) equiaxially with said at least one inner bushing (2),
- a nut (11) having a threaded hole (111) whose center is on the symmetrical axis of said at least one nut (11),
- said at least one assembly slot (14) ensuring said at least one drive shaft (4) and said at least one small gear ring (20) to be placed outside of said at least one outer bushing (3) by enabling the support shaft (8) to drive off said at least one outer bushing (3),
- said at least one small gear ring (20) being placed out of said at least one outer bushing (3) in order to make room in said at least one inner bushing (2) and facilitate maintenance and assembly,
- said at least once drive gear (19) placed out of said at least one outer bushing (3) in order to make room in said at least one inner bushing (2) and facilitate maintenance and assembly,
- said at least one inner bushing (2) being produced from sheet metal for low weight and cost, and whose endurance level is increased by stamping press (13),
- said at least one outer bushing (3) being produced from sheet metal for low weight and cost, and whose endurance level is increased by stamping press (13).

2. A parking leg (1) as stated in the claim 1 which is **characterized by** said at least one outer bushing (3) which can move upwards and downwards on said at least one inner bushing (2)

3. A parking leg (1) as stated in one of the claims above which is **characterized by** said at least one drive shaft (4) that moves together with the outer bushing (3) during the movement of said at least one outer bushing (3).

4. A parking leg (1) as stated in one of the claims above which is **characterized by** said at least once drive shaft (4), wherein one end of which can drive off said at least one outer bushing (3) through the assembly slot (14).

5. A parking leg (1) as stated in one of the claims above which is **characterized by** the support shaft (8), wherein one end of which can drive off said at least one outer bushing (3) through the assembly slot (14).

6. A parking leg (1) as stated in one of the claims above which is **characterized by** said at least one height adjusting shaft (10) with screw pitches on its exterior surface.

7. A parking leg (1) as stated in one of the claims above which is **characterized by** said at least one nut (11) with screw pitches on its inner surface.

8. A parking leg (1) as stated in one of the claims above which is **characterized by** said at least one drive gear (19) which is fixed to the part of said at least one drive shaft (4), which can be removed from said at least one outer bushing (3) through assembly slot (14).

9. A parking leg (1) as stated in one of the claims above which is **characterized by** said at least one small gear ring which is fixed to the part of support shaft (8), which can be removed from the outer bushing (3) through assembly slot (14).

10. A parking leg (1) as stated in one of the claims above which is **characterized by** said assembly slot (14) placed on said at least one outer bushing (3) and ensuring drive shaft (19) and said at least one small gear ring (20) to be placed outside of said at least one outer bushing (3) by enabling one end of the support shaft (8) and drive shaft (4) to drive off the outer bushing (3).

11. A parking leg (1) as stated in one of the claims above which is **characterized by** a transmission cover (18) which is placed over said at least one drive gear (19) and said at least one small gear ring (20) which is located out of said at least one outer bushing (3), and protects said at least one drive gear (19) and said at least one small gear ring (20) from outer environment.

12. A parking leg (1) as in claim 11 which is **characterized by** said transmission cover (18) which can be assembled to and disassembled from said at least one outer bushing (3) via screws.

13. A parking leg (1) as stated in claim 11 or 12 which is **characterized by** said transmission cover (18) having countersinks, which are equiaxial with the connection axis, around the screw holes used for its assembly to said at least one outer bushing.

14. A parking leg (1) as stated in claim 11 or 12 or 13 which is **characterized by** said transmission cover (18) whose endurance level is increased by horizontal, vertical and rotational stamping press.

## Patentansprüche

1. Eine Parkstütze (1), die es ermöglicht, dass die Anhänger, Lkw-Anhänger und Sattelschlepper ohne ein Zugelement fest und funktionell stehen, aufweisend;
- zumindest eine innere Buchse (2),
- zumindest eine äußere Buchse (3), die an der äußeren Seite der besagten mindestens einen inneren Buchse (2) angeordnet ist und sich aufwärts (U) und abwärts (D) bewegt,
- zumindest einen Getriebedeckel (18), der auf der mindestens einen besagten äußeren Buchse (3)angeordnet ist,
- zumindest eine Antriebswelle (4), die zur Achse der mindestens einen besagten inneren Buchse (2) und der zumindest einen besagten äußeren Buchse (3) senkrecht angeordnet ist,
- zumindest ein Ritzel (5), das der zumindest einer besagten Antriebswelle (4) befestigt ist, die mit der zumindest einen besagten Antriebswelle (4) äquiaxial ist,
- mindestens einen großen Zahnkranz (6),
- zumindest ein vertikales Kegelzahnrad (7), das zum zumindest einem besagten großen Zahnkranz (6) befestigt ist, der mit dem zumindest einem besagten Zahnkranz (6) äquiaxial ist,
- eine Stützwelle (8), die durch die Zentren des zumindest einen besagten großen Zahnkranzes (6) sowie des zumindest einen besagten Kegelzahnrads (7) hindurchgeführt ist,
- zumindest ein horizontales Kegelzahnrad (9), das an einer zur Achse des zumindest einen besagten Kegelzahnrads (7) vertikalen Achse angeordnet ist und mit dem zumindest einen besagten Kegelzahnrad (7) in Kontakt steht,
- zumindest eine Höhenjustierwelle (10), die an dem mindestens einen besagten horizontalen Kegelzahnrad (9) befestigt ist,
- zumindest einen Schuh (17), der an der zumindest einen besagten inneren Buchse (2) befestigt ist,
- zumindest ein Antriebswellenlager (23), welches in der mindestens einen besagten äußeren Buchse angeordnet ist und die zumindest eine besagte Antriebswelle (4) trägt und wodurch die zumindest eine besagte Höhenjustierwelle (10) hindurchgeführt ist,
- zumindest eine Nut (11), durch welche die mindestens eine besagte Höhenjustierwelle (10) hindurchgeführt wird und welche in der mindestens einen besagten inneren Buchse (2) platziert ist,
- eine Gewindebohrung (111), die auf der zumindest einen besagten Nut (11) angeordnet ist, wobei sie es ermöglicht, dass die zumindest eine besagte Höhenjustierwelle (10) durch die zumindest eine besagte Nut (11) hindurchgeht,
- zumindest eine Nut-Halterung (21), die zumindest eine besagte Nut (11) innerhalb der zumindest einen besagten inneren Buchse (2) festhält,
- eine Ölwanne (22), die auf dem oberen Teil der Nut (11) angeordnet ist (11),
- zumindest ein Antriebsrad (19),
- zumindest einen kleinen Zahnkranz (20), der den von dem zumindest einen besagten Antriebsrad (19) kommenden Antrieb zur Stützwelle (8) und zum großen Zahnkranz (6) überträgt,
- Konnektor-Platten (12) auf beiden Seiten der zumindest einen besagten äußeren Buchse (3),
- Befestigungslöcher (121), die auf den Konnektor-Platten (12) angeordnet sind,
- Prägepresse (13), die auf der zumindest einen besagten äußeren Buchse (3) angewandt wird, um die Haltbarkeit der zumindest einen besagten äußeren Buchse (3) zu erhöhen,
- zumindest eine Montage-Aussparung (14), die auf der mindestens einen besagten äußeren Buchse (3)platziert ist,
- Profilpressen (15), das zu der zumindest einen besagten äußeren Buchse (3) angewandt wird,
- äquiaxiale Versenkungen (16) auf den Konnektor-Platten (12),
und wobei
- eine Höhenjustierwelle (10) äquiaxial mit der zumindest einen besagten inneren Buchse (2) in der zumindest einen besagten inneren Buchse (2) angeordnet ist,
- eine Nut (11) eine Gewindebohrung (111) aufweist, deren Mittelpunkt auf einer Symmetrieachse der zumindest einen besagten Nut (11) ist,
- die zumindest eine besagte Montage-Aussparung (14) es ermöglicht, dass zumindest eine besagte Antriebswelle (4) und zumindest ein kleiner Zahnkranz außerhalb der zumindest einen besagten äußeren Buchse (3) angeordnet werden, indem es ermöglicht wird, dass die Stützwelle (8) aus zumindest einer besagten äußeren Buchse (3) herausgeführt ist,
- zumindest ein besagter kleiner Zahnkranz (20) außerhalb der zumindest einen besagten äußeren Buchse (3) angeordnet wird, um in der zumindest einen besagten inneren Buchse (2) Platz zu machen und Wartungsarbeiten sowie Montage zu erleichtern,
- zumindest ein besagtes Antriebsrad (19) außerhalb der zumindest einen besagten äußeren Buchse (3) angeordnet wird, um in der zumindest einen besagten inneren Buchse (2) Platz zu machen und Wartungsarbeiten sowie Montage zu erleichtern,
- die zumindest eine besagte innere Buchse (2) im Hinblick auf leichtes Gewicht und niedrige Kosten aus Blech gefertigt ist und deren Haltbarkeits-Niveau durch Prägepresse (13) erhöht ist,
- die zumindest eine besagte äußere Buchse (3) im Hinblick auf leichtes Gewicht und niedrige Kosten aus Blech gefertigt ist und deren Haltbarkeits-Niveau durch Prägepresse (13) erhöht ist,

2. Eine Parkstütze (1) wie im Anspruch 1, **gekennzeichnet durch** zumindest eine äußere Buchse (3), welche sich auf der mindestens einen besagten inneren Buchse (2) aufwärts und abwärts bewegen kann.

3. Eine Parkstütze (1) wie in einem der vorangegangenen Ansprüche, **gekennzeichnet durch** mindestens eine besagte Antriebswelle (4), die sich während der Bewegung der mindestens einen besagten äußeren Buchse (3) zusammen mit der äußeren Buchse (3) bewegt.

4. Eine Parkstütze (1) wie in einem der vorangegangenen Ansprüche, **gekennzeichnet durch** mindestens eine besagte Antriebswelle (4), wobei deren ein Ende **durch** die Montage-Aussparung (14) hindurch aus zumindest einer besagten äußeren Buchse (3) herausgeführt ist.

5. Eine Parkstütze (1) wie in einem der vorangegangenen Ansprüche, **gekennzeichnet durch** Stützwelle (8), wobei deren ein Ende **durch** die Montage-Aussparung (14) hindurch aus zumindest einer besagten äußeren Buchse (3) herausgeführt ist

6. Eine Parkstütze (1) wie in einem der vorangegangenen Ansprüche, **gekennzeichnet durch** zumindest eine besagte Höhenjustierwelle (10) mit Gewindegängen auf ihrer äußeren Oberfläche.

7. Eine Parkstütze (1) wie in einem der vorangegangenen Ansprüche, **gekennzeichnet durch** zumindest eine besagte Nut (11) mit Gewindegängen auf ihrer inneren Oberfläche.

8. Eine Parkstütze (1) wie in einem der vorangegangenen Ansprüche, **gekennzeichnet durch** mindestens ein besagtes Antriebsrad (19), welches an einem Teil der zumindest einen besagten Antriebswelle (4) befestigt ist, welche durch die Montage-Aussparung (14) aus der zumindest einen besagten äußeren Buchse (3) entnommen werden kann.

9. Eine Parkstütze (1) wie in einem der vorangegangenen Ansprüche, **gekennzeichnet durch** mindestens einen besagten kleinen Zahnkranz, welcher an einem Teil der Stützwelle (8) befestigt ist, welche **durch** die Montage-Aussparung (14) aus der zumindest einen besagten äußeren Buchse (3) entnommen werden kann.

10. Eine Parkstütze (1) wie in einem der vorangegangenen Ansprüche, **gekennzeichnet durch** besagte Montage-Aussparung (14), die auf der zumindest einen besagten äußeren Buchse (3) angeordnet ist und es ermöglicht, dass die Antriebswelle (19) und der zumindest einen besagten kleinen Zahnkranz (20) außerhalb der mindestens einen besagten äußeren Buchse (3) platziert ist, indem es ermöglicht wird, dass ein Ende der Stützwelle (8) und der Antriebswelle (4) aus der äußeren Buchse (3) herausgeführt ist.

11. Eine Parkstütze (1) wie in einem der vorangegangenen Ansprüche, **gekennzeichnet durch** einen Getriebedeckel (18), welcher auf dem zumindest einen besagten Antriebsrad (19) und dem zumindest einen besagten kleinen Zahnkranz (20) platziert ist, welcher außerhalb der mindestens einen äußeren Buchse (3) angeordnet ist und zumindest ein besagtes Antriebsrad (19) und zumindest einen besagten kleinen Zahnkranz (20) vor der äußeren Umgebung schützt.

12. Eine Parkstütze (1) wie im Anspruch 11, **gekennzeichnet durch** den besagten Getriebedeckel (18), der an dem zumindest einen besagten äußeren Buchse (3) mittels Schrauben eingebaut oder davon demontiert werden kann.

13. Eine Parkstütze (1) wie im Anspruch 11 oder 12, **gekennzeichnet durch** den besagten Getriebedeckel (18) aufweisend Versenkungen, welche um die Befestigungslöcher herum, die zur dessen Montage zu der zumindest einen besagten äußeren Buchse eingesetzt werden, äquiaxial mit der Verbindungsachse sind.

14. Eine Parkstütze (1) wie im Anspruch 11 oder 12 oder 13, **gekennzeichnet durch** den besagten Getriebedeckel (18), dessen Haltbarkeit **durch** horizontale, vertikale und rotationsmäßige Prägepresse erhöht wird.

## Revendications

1. Un pied de stationnement (1) permettant aux remorques, remorques de camion, et remorques de tracteur de reposer fermement et fonctionnellement dans le parking sans ayant une unité de tracteur comportant:
- au moins une bague intérieure (2),
- au moins une bague extérieure (3) située à l'extérieure de ladite au moins une bague intérieure (2) et se déplaçant vers le haut (U) et vers le bas (D),
- au moins un capot de transmission (18) située sur au moins une bague extérieure (3),
- au moins un arbre d'entrainement (4) placé verticalement aux axes de ladite au moins une bague intérieure (2) et au moins une bague extérieure (3),
- au moins un engrenage à pignons (5) fixé sur au moins un arbre d'entrainement (4) étant équiaxial avec ledit au moins un arbre d'entrainement,
- au moins une large couronne dentée (6),
- au moins un pignon conique vertical (7) fixé sur au moins une large couronne dentée (6) étant équiaxial avec ladite large couronne dentée (6),
- au moins un arbre de support (8) passant par les centres de ladite au moins une couronne dentée (6) et au moins un pignon conique vertical (7),
- au moins un pignon conique horizontal (9) placé dans un axe vertical à l'axe dudit pignon conique vertical (7) et étant en contact avec au moins un pignon conique vertical (7),
- au moins un arbre de réglage en hauteur (10) fixé sur au moins un pignon conique horizontal (9),
- au moins un sabot (17) fixé ladite au moins une bague intérieure (2),
- au moins un palier d'arbre d'entrainement (23) situé dans au moins une bague extérieure (3) et supportant au moins arbre d'entrainement (4) et par lequel passe au moins un arbre de réglage en hauteur (10),
- au moins un écrou (11) par lequel passe au moins un arbre de réglage en hauteur (10) et qui est placé dans ladite au moins une bague intérieure (2),
- un trou taraudé (111) situé sur ladite au moins un écrou (11) assurant que ledit arbre de réglage (10) passe par ledit au moins un écrou (11),
- au moins un écrou-porteur (21) fixant ledit au moins un écrou (11) à l'intérieur de ladite au moins une bague intérieure (2),
- un carter d'huile (22) situé sur la partie supérieure (U) de l'écrou,
- au moins un engrenage d'entrainement (19),
- au moins une petite bague d'entrainement (20) transférant la transmission arrivant dudit au moins en engrenage d'entrainement (19) à l'arbre support (8) et la large bague d'entrainement (6), aux plaques de connexion (12) sur les deux côtés de ladite au moins une bague extérieure (3), aux trous de vis (121) situés sur les plaques de connexion (12), la pression d'emboutissage (13) étant appliquée sur ladite au moins une bague extérieure (3) pour augmenter la résistance de ladite au moins une bague extérieure (3),
- au moins un rainure de montage (14) placé sur au moins une bague extérieure (3), le profilé pressant (15) exercé à ladite au moins une bague extérieure (3), les fraises équiaxiaux (16) sur les plaques de connexion (12), et dans lequel est placée un arbre de réglage en hauteur (10) à l'intérieur de ladite au moins une bague intérieure (2) équiaxialement avec ladite au moins une bague intérieure (2), un écrou (11) ayant un trou taraudé (111) dont le centre est sur l'axe symétrique dudit au moins un écrou (11),
- au moins un rainure de montage (14) assurant le placement dudit au moins un arbre d'entrainement (4) et de ladite au moins une petite bauge d'entrainement (20) sur l'extérieure de ladite bague extérieure (3) en permettant au arbre d'entrainement de support (8) d'actionner ladite au moins une bague extérieure (3),
- ladite au moins une petite bague d'entrainement (20) étant placée à l'extérieure de ladite bague extérieure (3) afin de faire de la place dans ladite au moins une bague intérieure (2) et faciliter le maintien et le montage,
- ladite au moins un engrenage d'entrainement (19) étant placée à l'extérieure de ladite bague extérieure (3) afin de faire de la place dans ladite au moins une bague intérieure (2) et faciliter le maintien et le montage,
- ladite au moins une bague intérieure (2) étant réalisée en tôle métallique pour les poids et les coûts réduits, et dont le niveau de résistance est augmenté par la pression d'emboutissage (13),
- ladite au moins une bague extérieure (3) étant réalisée en tôle métallique pour les poids et les coûts réduits, et dont le niveau de résistance est augmenté par la pression d'emboutissage (13).

2. Un pied de stationnement (1) comme indiqué dans la revendication 1 qui est caractérisé en une bague extérieure (3) pouvant se déplacer vers le haut et le bas sur ladite au moins une bague intérieure (2).

3. Un pied de stationnement (1) comme indiqué dans l'une des revendications précédentes qui est **caractérisé par** ladite au moins un arbre d'entrainement (4) se déplaçant avec la bague extérieure (3) pendant le mouvement de ladite au moins une bague extérieure (3).

4. Un pied de stationnement (1) comme indiqué dans l'une des revendications précédentes qui est **caractérisé par** au moins un arbre d'entrainement (4), dans lequel l'une de ses extrémités peut actionner ladite au moins une bague extérieure (3) par le rainure de montage (14).

5. Un pied de stationnement (1) comme indiqué dans l'une des revendications précédentes qui est **caractérisé par** l'arbre de support (8), dans lequel l'une de ses extrémités peut actionner ladite au moins une bague extérieure (3) par le rainure de montage (14).

6. Un pied de stationnement (1) comme indiqué dans l'une des revendications précédentes qui est **caractérisé par** ledit arbre de réglage (10) avec les pas de vis sur sa surface extérieure.

7. Un pied de stationnement (1) comme indiqué dans l'une des revendications précédentes qui est **caractérisé par** au moins un écrou (11) avec les pas de vis sur sa surface intérieure.

8. Un pied de stationnement (1) comme indiqué dans l'une des revendications précédentes qui est **caractérisé par** un engrenage d'entrainement (19) qui est fixé à la partie dudit au moins un arbre d'entrainement (4), qui peut être enlevé de ladite au moins une bague extérieure (3) par le rainure de montage (14).

9. Un pied de stationnement (1) comme indiqué dans l'une des revendications précédentes qui est **caractérisé par** une bauge d'entrainement qui est fixé à la partie de l'arbre de support (8) qui peut être enlevé de ladite au moins une bague extérieure (3) par le rainure de montage (14).

10. Un pied de stationnement (1) comme indiqué dans l'une des revendications précédentes qui est **caractérisé par** ledit rainure de montage (14) placé sur ladite au moins une bague extérieure (3) et assurant le placement de l'arbre d'entrainement (19) et ladite au moins une petite bague d'entrainement (20) sur l'extérieure de ladite au moins une bague extérieure (3) en permettant à une extrémité de l'arbre de support (8) et l'arbre d'entrainement (4) d'actionner la bague extérieure (3).

11. Un pied de stationnement (1) comme indiqué dans l'une des revendications précédentes qui est **caractérisé par** un capot de transmission (18) placé sur ledit au moins un engrenage d'entrainement (19) et ladite petite bague d'entrainement (20) située à l'extérieur de ladite au moins une bague extérieure (3) et protégeant ledit au moins engrenage d'entrainement (19) et ladite petite bague d'entrainement (20) du milieu extérieur.

12. Un pied de stationnement (1) selon la revendication 11 qui est **caractérisé par** ledit capot de transmission (18) pouvant être monté à ou démonté de ladite au moins une bague extérieure (3) par les vis.

13. Un pied de stationnement (1) selon la revendication 11 ou 12 qui est **caractérisé par** ledit capot de transmission (18) ayant des fraises étant équiaxiaux avec les axes de connexion, autour des trous de vis utilisés pour son montage à ladite au moins une bague extérieure.

14. Un pied de stationnement (1) comme indiqué dans la revendication 11 ou 12 ou 13 qui est **caractérisé par** le capot de transmission (18) dont le niveau de résistance est augmenté par la pression d'emboutissage horizontale, verticale, et rotative.
